# FASCICULE DE BREVET EUROPEEN

(11) **EP 1 553 754 B1**
(45) Date de publication et mention de la délivrance du brevet: **19.03.2008**
(21) Numéro de dépôt: 05290043.8
(22) Date de dépôt: 07.01.2005
(51) Int. Cl.: H04N 1/52

(54) **Procédé et dispositif d'établissement de trames par diffusion d'erreur et limitation d'encre par matrices de valeurs de seuils**
Verfahren und Vorrichtung zum Erzeugen von Rahmenfehlerdiffusion und Tintenmengenbegrenzung durch Schwellewertmatrix
Method and device for establishing frame error diffusion and ink limiting by threshold value matrix

(30) Priorité: 09.01.2004 FR 0400151
(43) Date de publication de la demande: 13.07.2005
(73) Titulaire: SAGEM Communication, 75015 Paris (FR)
(72) Inventeur: Monnerie, Nicolas, 21800 Quetigny (FR); Ostromoukhov, Victor, H2V3P3 Outremont-Quebec (CA)
(74) Mandataire: Debay, Yves

(56) Documents cités:
- EP-A- 0 654 940
- EP-A- 0 889 640
- US-B1- 6 535 635
- US-B1- 6 603 573

## Description

### DOMAINE TECHNIQUE DE L'INVENTION

La présente invention s'applique au domaine de l'électronique et plus particulièrement à l'établissement de trames d'impression ou d'affichage. La présente invention concerne un procédé d'établissement de trames par diffusion d'erreur utilisant, au cours du tramage, des matrices de valeurs de seuils, éventuellement générées par des circuits électroniques simples.

### ARRIERE-PLAN TECHNOLOGIQUE DE L'INVENTION

Une trame est un ensemble de lignes successives constituées de points successifs (ou pixels) dont l'arrangement bidimensionnel et les compositions chromatiques et/ou les luminances définissent une image. Le tramage correspond donc à l'attribution d'une couleur et/ou d'une luminance ou d'un niveau de gris à chaque pixel de la trame.

Il est connu dans l'art antérieur des procédés de tramage par diffusion d'erreur dans lesquels les niveaux de gris des pixels d'une image en cours de tramage sont comparés à un seuil pour attribuer aux pixels la couleur noire ou la couleur blanche. A chaque comparaison au seuil, l'erreur correspondant à l'approximation réalisée est gardée en mémoire pour influencer la comparaison au seuil des pixels suivants et voisins dans la trame. L'erreur réalisée sur chaque pixel est donc diffusée sur les pixels voisins. Grâce à cette diffusion d'erreur, des pixels dont les différents niveaux de gris, par exemple codés sur 8 bits, ne sont pas directement imprimables ou affichables sont transformés en des pixels noirs et blancs codés sur 1 bit dont la combinaison présente le même aspect visuel que les niveaux de gris d'origine.

Il est également connu, notamment par le brevet US 6,603,573 B1, des Procédés de tramage par diffusion d'erreur vectorielle dans lesquels les couleurs subissent un changement de l'espace des couleurs. Au lieu d'être représentées par de couches de couleurs primaires, les couleurs sont représentées par des vecteurs dans un espace à plusieurs dimensions. Chaque composante chromatique (et/ou de luminance) correspond à une dimension de l'espace. Les caractéristiques chromatiques (et/ou de luminance) d'un pixel sont donc représentées par un vecteur dans cet espace pluridimensionnel. Parmi les vecteurs de cet espace, certains correspondent exactement à des combinaisons de couleurs directement imprimables ou affichables par les dispositifs d'impression ou d'affichage et sont appelés vecteurs de référence. Pour chaque vecteur représentatif d'un pixel, le vecteur de référence le plus proche est recherché en calculant l'erreur vectorielle minimum (la différence minimum entre le vecteur représentatif du pixel et un des vecteurs de référence). L'erreur vectorielle introduite pour ce pixel est ensuite diffusée sur les pixels suivants pour influencer leur représentation vectorielle dans l'espace pluridimensionnel. En appliquant ce principe de diffusion d'erreur vectorielle, des pixels dont la couleur exacte (par exemple codée sur 32 bits) ne peut être imprimée ou affichée directement sont transformés en pixels composés de couleurs directement imprimables ou affichables (par exemple codée sur 8 bits) et dont la combinaison présente le même aspect visuel que les couleurs d'origine.

Ces procédés de tramage par diffusion d'erreur peuvent poser des problèmes de limitation d'encre. Souvent, certains pixels d'une trame peuvent ne pas être imprimés sans que la qualité de l'image ne soit dégradée. Il est alors avantageux de ne pas imprimer ces pixels inutiles afin de limiter le gaspillage d'encre et d'éviter des problèmes de saturation d'encre sur des papiers dont les propriétés d'absorption ne sont pas optimales. Ainsi, il est connu, notamment par la demande de brevet EP 0 654 940 A1, des procédés de tramage avec limitation d'encre par décision, avant ou après le tramage, des pixels à ne pas imprimer, par exemple d'après un calcul de la somme de leurs composantes chromatiques.

Ces procédés de limitation d'encre posent généralement des problèmes de qualité de l'image résultante à cause des algorithmes de décision des pixels à enlever utilisés.

### DESCRIPTION GENERALE DE L'INVENTION

La présente invention a pour but de pallier certains inconvénients de l'art antérieur en proposant un procédé d'établissement de trame de signaux représentatifs d'une image, par diffusion d'erreur, qui permet la limitation d'encre par utilisation de matrices de valeur de seuils, tout en préservant une bonne qualité de l'image obtenue. Une variante de réalisation proposée permet un procédé rapide, du fait qu'il ne nécessite pas la consultation systématique de matrices stockées en mémoire.

Ce but est atteint par le fait que l'invention consiste en un procédé d'établissement de trame de signaux représentatifs d'une image, par diffusion d'erreur, réalisant une représentation des pixels en « vecteurs » d'un espace de représentation dont au moins une dimension correspond à une composante chromatique et dans lequel certains vecteurs, dits « vecteurs de référence », correspondent chacun à une composition chromatique directement imprimable ou affichable par les dispositifs auxquels la trame est destinée, caractérisé en ce qu'il comporte au moins une étape de limitation d'encre par utilisation d'au moins une matrice de valeurs de seuils contenant des valeurs de seuils calculées à partir d'au moins une partie des signaux représentatifs des coordonnées du pixel dans l'image.

Selon une autre particularité, le procédé comporte les étapes suivantes pour chaque pixel de la trame :
- représentation d'un pixel dans ledit espace sous la forme de signaux représentatifs d'un vecteur initial dont les coordonnées sont ajustées, en fonction des erreurs vectorielles mémorisées éventuellement introduites sur les pixels précédents et voisins dans la trame, pour obtenir un vecteur ajusté, dont les coordonnées sont stockées en mémoire ;
- attribution aux signaux représentatifs des coordonnées du vecteur ajusté des signaux représentatifs de coordonnées du vecteur de référence le plus proche du vecteur ajusté représentatif du pixel en cours de traitement, puis calcul et mémorisation de l'erreur vectorielle introduite pour ce pixel, par comparaison des nouvelles coordonnées attribuées au vecteur avec ses coordonnées ajustées préalablement stockées en mémoire, puis diffusion de cette erreur vectorielle mémorisée aux pixels suivants et voisins dans la trame ;
- extraction, à partir d'au moins une matrice de valeurs de seuils, les seuils étant relatifs à une composante chromatique correspondant à une dimension de l'espace de représentation des vecteurs, d'une valeur de seuil dite extraite, calculée à partir d'au moins une partie des signaux représentatifs des coordonnées du pixel dans l'image ;
- réglage de la valeur de seuil extraite pour obtenir une valeur de seuil résultante, puis comparaison de la valeur de seuil résultante avec la valeur du signal représentatif des coordonnées du vecteur initial dans cette dimension et attribution au pixel d'une valeur de décision de validation de la composante chromatique concernée par cette dimension de l'espace de représentation, correspondant à l'autorisation ou l'interdiction de l'attribution au pixel de cette composante chromatique ;
- intégration de la valeur de décision de validation attribuée pour chacune des composantes chromatiques dans les coordonnées du vecteur de référence le plus proche attribué au pixel, pour la décision finale des coordonnées du vecteur à attribuer au pixel en cours de traitement, dit vecteur de référence final.

Selon une autre particularité, l'étape d'attribution aux signaux représentatifs des coordonnées du vecteur ajusté des signaux représentatifs de coordonnées du vecteur de référence le plus proche du vecteur ajusté représentatif du pixel en cours de traitement est réalisée par un algorithme de calcul du vecteur de référence le plus proche du vecteur ajusté représentatif du pixel en cours de traitement.

Selon une autre particularité, l'étape d'attribution aux signaux représentatifs des coordonnées du vecteur ajusté des signaux représentatifs de coordonnées du vecteur de référence le plus proche du vecteur ajusté représentatif du pixel en cours de traitement est réalisée par comparaison des valeurs des signaux représentatifs des coordonnées du vecteur ajusté représentatif du pixel en cours de traitement avec des valeurs de seuils réglables pour chacune des dimensions de l'espace de représentation.

Selon une autre particularité, l'étape d'attribution aux signaux représentatifs des coordonnées du vecteur ajusté des signaux représentatifs de coordonnées du vecteur de référence le plus proche du vecteur ajusté représentatif du pixel en cours de traitement est réalisée par consultation d'une mémoire contenant une table de correspondance entre une pluralité de vecteurs ajustés représentatifs de compositions chromatiques et une pluralité de vecteurs de référence représentatifs de compositions chromatiques directement imprimable ou affichable par les dispositifs auxquels la trame est destinée.

Selon une autre particularité, le calcul de l'erreur vectorielle est indépendant du vecteur de référence final attribué au pixel mais dépend du vecteur de référence le plus proche du vecteur ajusté représentatif du pixel en cours de traitement avant l'étape d'intégration de la valeur de décision de validation des composantes chromatiques du pixel et comporte une étape de calcul d'un vecteur d'erreur dont les coordonnées, dans ledit espace, sont égales à la différence entre les coordonnées du vecteur de référence le plus proche attribuées au vecteur ajusté représentatif du pixel en cours de traitement et ses coordonnées ajustées préalablement stockées en mémoire.

Selon une autre particularité, la diffusion de l'erreur vectorielle mémorisée consiste en l'ajustement des vecteurs initiaux par ajout, dans ledit espace, des signaux représentatifs des coordonnées d'un vecteur d'erreur calculé et mémorisé pour un pixel, aux signaux représentatifs des coordonnées des vecteurs initiaux représentatifs des pixels suivants et voisins dans la trame, pour obtenir des vecteurs ajustés.

Selon une autre particularité, le procédé comporte également une étape de transmission des signaux représentatifs des coordonnées du vecteur de référence final représentatif du pixel en cours de traitement vers le dispositif auquel la trame est destinée, qui peut se faire directement ou après conversion des signaux représentatifs des vecteurs de référence finaux attribués en valeurs utilisables par les dispositifs auxquels la trame est destinée, pour déterminer les caractéristiques chromatiques et/ou de luminance d'un point de l'image.

Selon une autre particularité, l'étape de réglage de la valeur de seuil extraite consiste en l'ajout d'un facteur de décalage réglable puis la multiplication par un facteur d'échelle réglable.

Selon une autre particularité, ladite matrice de valeurs de seuils est une matrice de Bayer construite à partir des signaux représentatifs des coordonnées des pixels dans l'image, représentées sur n bits, parmi lesquels plusieurs m bits de poids faibles sont utilisés pour calculer les valeurs de seuils de compositions chromatiques contenues dans la matrice, le nombre m de bits de poids faibles utilisés définissant les dimensions réduites de la matrice par rapport à l'image complète et les n-m bits restant définissant les différentes positions complémentaires dans lesquelles l'utilisation de la matrice doit être répétée pour le traitement de l'image dans son intégralité.

Selon une autre particularité, les valeurs de seuils contenues dans la matrice sont calculées par un algorithme mettant en oeuvre la théorie mathématique des suites à basse discrépence.

Selon une autre particularité, l'algorithme de calcul des valeurs de seuils contenues dans la matrice met en oeuvre les suites de Van Der Corput.

Selon une autre particularité, ladite matrice de valeurs de seuils est générée par un circuit électronique implémenté dans le dispositif d'établissement de trames de signaux, au lieu d'être stockée dans une mémoire et consultée pour chaque pixel.

Le but de l'invention est également atteint par un dispositif d'établissement de trame comprenant des moyens de traitement de l'image à tramer en lignes successives composées de pixels successifs, des moyens de mémorisation des pixels successifs d'au moins une ligne de la trame, des moyens de calcul de signaux représentatifs des coordonnées des pixels dans l'image, des moyens de conversion de chaque pixel de l'image sous forme d'un vecteur d'un espace dont au moins une dimension correspond à une composante chromatique et/ou de luminance, des moyens d'attribution de coordonnées de vecteurs de référence aux coordonnées des vecteurs représentatifs des pixels en cours de traitement, des moyens de calcul et de mémorisation d'erreurs introduites par le traitement des pixels, des moyens de diffusion d'erreur sur des pixels adjacents de la trame et des moyens de transmission de signaux de commandes élaborés en fonction de la trame vers les dispositifs auxquels la trame est destinée, caractérisé en ce qu'il comporte au moins une matrice concernant une composante chromatique et contenant des valeurs de seuils générées à partir d'au moins une partie des signaux représentatifs des coordonnées des pixels dans l'image.

Selon une autre particularité, les moyens de calcul des signaux représentatifs des coordonnées des pixels dans l'image permettent la discrimination, parmi les n signaux représentatifs des coordonnées des pixels dans l'image, de plusieurs m bits de poids faibles pour la génération des valeurs de seuils de la matrice et des n-m bits restant pour la définition de la région de l'image dans laquelle les signaux représentatifs des coordonnées des vecteurs initiaux représentatifs des pixels, dans la dimension de l'espace correspondant à la composante chromatique concernée par la matrice, doivent être comparés à ces valeurs de seuils de la matrice.

Selon une autre particularité, la matrice de valeurs de seuils est générée par un circuit électronique implémenté dans le dispositif d'établissement de trame et comportant, dans deux dimensions, des entrées au moins en nombre correspondant au nombre m de bits de poids faible pour recevoir, parmi les signaux représentatifs des coordonnées des pixels dans l'image, ces m bits de poids faibles, utilisés pour la génération des valeurs de seuils, grâce à des portes logiques connectées à certaines desdites entrées du circuit et constituant les sorties du circuit, véhiculant les signaux représentatifs des valeurs de seuils de la matrice.

### BREVE DESCRIPTION DES DESSINS

D'autres particularités et avantages de la présente invention apparaîtront plus clairement à la lecture de la description ci-après, faite en référence aux dessins annexés, dans lesquels :
- la figure 1 représente un schéma de l'algorithme itéré pour chaque pixel d'une image lors de la mise en oeuvre du procédé selon l'invention de tramage par matrice de valeurs de seuils et diffusion d'erreur.
- la figure 2 représente un schéma du circuit électronique de génération de la matrice de valeurs de seuils selon l'invention.

### DESCRIPTION DES MODES DE REALISATION PREFERES DE L'INVENTION

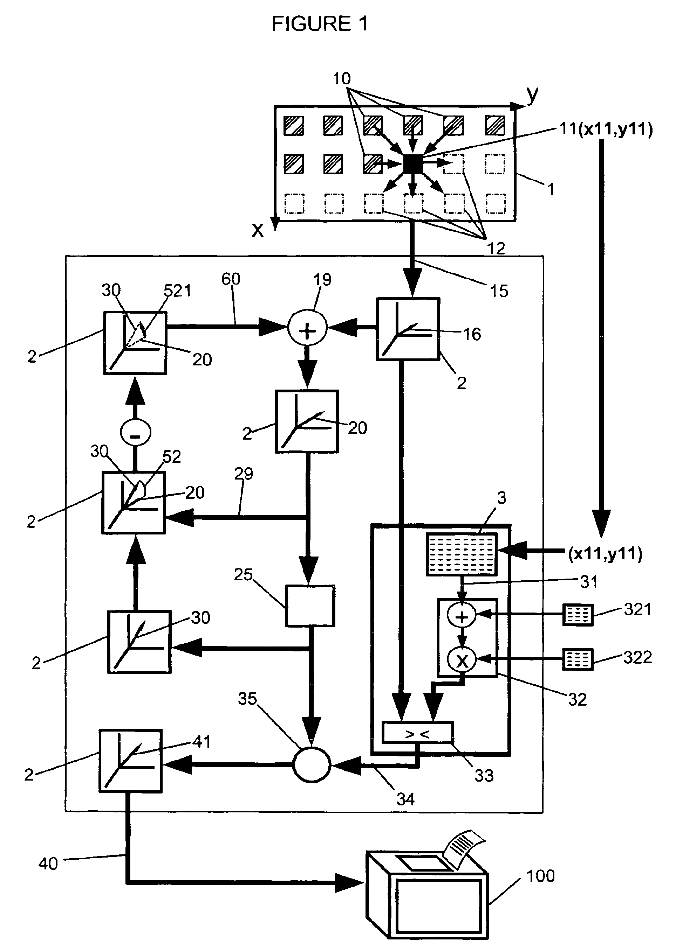

La présente invention de procédé et de dispositif d'établissement de trames (1) de signaux par diffusion d'erreurs vectorielles (52) et limitation d'encre par matrices de valeurs de seuils utilise un procédé de tramage par diffusion d'erreur classique mais comporte également des étapes de limitation d'encre, reposant sur l'utilisation de matrices (3) de valeurs de seuils, en parallèle des étapes de tramage par diffusion d'erreur. Grâce à des moyens de conversion de chaque pixel de l'image sous forme d'un vecteur, le dispositif de tramage par diffusion d'erreur vectorielle (52) réalise une représentation (15) des pixels successifs d'une image en vecteurs initiaux (16) d'un espace (2) de représentation, dont au moins une dimension correspond à une composante chromatique et/ou de luminance. Parmi ces vecteurs, certains représentent une combinaison de couleurs directement imprimable ou affichable par les dispositifs (100) auxquels la trame (1) est destinée et sont appelés vecteurs de référence (30). La figure 1 représente le procédé selon l'invention tel qu'il est itéré pour chaque pixel (11) de la trame (1), grâce à des moyens de traitement de l'image à tramer en lignes successives composées de pixels successifs et des moyens de mémorisation de lignes successives de la trame, présents dans le dispositif d'établissement de trames. Les pixels déjà traités sont représentés en hachuré, le pixel (11) en cours de traitement est représenté en noir et les pixels non traités sont représentés en pointillé. La représentation (15) du pixel (11) en cours de traitement en un vecteur initial (16) dans l'espace (2) de représentation est ensuite ajustée en fonction des erreurs vectorielles (52) mémorisées, éventuellement introduites sur les pixels (10) précédents et voisins dans la trame. Cet ajustement (19) du vecteur initial (16), représentatif du pixel (11) en cours de traitement, aboutit à un vecteur ajusté (20), dont les coordonnées dépendent de l'erreur vectorielle (52) éventuellement réalisée sur les pixels (10) précédents et voisins dans la trame. Une étape de stockage (29) de ce vecteur ajusté (20) dans une mémoire permettra le calcul de l'erreur vectorielle (52) introduite sur le pixel (11), qui sera diffusée aux pixels (12) suivants et voisins dans la trame. Pour chaque vecteur ajusté (20) représentatif de la composition chromatique du pixel (11) en cours de traitement, le vecteur (30) de référence le plus proche du vecteur ajusté (20) représentatif du pixel (11) est recherché pour attribuer au pixel (11) des signaux directement utilisables par le dispositif (100) auquel la trame est destinée. Cette recherche (25) du vecteur (30) de référence le plus proche peut être réalisée de plusieurs manières, selon les algorithmes connus de l'art antérieur. Par exemple, elle pourra consister en un calcul systématique de la différence minimale entre un vecteur ajusté (20) représentatif du pixel (11) et un vecteur (30) de référence. Une autre manière consiste en la comparaison des valeurs des signaux représentatifs des coordonnées du vecteur ajusté (20) représentatif du pixel (11) dans chacune des dimensions de l'espace de représentation avec des valeurs de seuils réglables puis à l'attribution aux coordonnées du vecteur de la valeur extrême du côté de laquelle elles se trouvent par rapport à ces seuils dans chacune des dimensions. Une manière plus rapide consiste en une consultation d'une table contenant le vecteur (30) de référence le plus proche pour chacun des vecteurs ajustés (20) possibles dans l'espace de représentation. Quelle que soit la méthode utilisée, elle permettra d'attribuer au pixel (11) un vecteur (30) de référence correspondant à une composition chromatique directement imprimable ou affichable par les dispositifs (100) auxquels la trame est destinée, tout en réalisant une approximation la plus faible possible. Cette approximation correspond à l'erreur vectorielle (52) introduite pour le pixel (11) en cours de traitement. Le vecteur (30) de référence est donc comparé au vecteur ajusté (20), stocké (29) en mémoire, pour le calcul de l'erreur vectorielle (52) introduite pour ce pixel (11), grâce à des moyens de calcul et de mémorisation d'erreur du dispositif de tramage. L'erreur vectorielle (52) consiste en un vecteur d'erreur (521) qui sera ajouté aux coordonnées des vecteurs de représentation des pixels suivants et voisins dans la trame grâce à des moyens de diffusion d'erreur sur des pixels adjacents de la trame. Cet ajout du vecteur d'erreur (521) aux pixels successifs constitue la diffusion (60) d'erreur, indépendante de la décision finale de validation ou non des différentes composantes chromatiques des pixels. Cette diffusion (60) d'erreur est représentée, dans la trame (1), par les flèches entre pixels voisins. Elle permet qu'un ensemble de pixel présente le même aspect visuel que l'image de départ malgré les erreurs réalisées à cause de l'attribution de vecteur (30) de référence le plus proche.

Dans une variante de réalisation correspondant au cas le plus simple, l'image à traiter est une image en noir et blanc, constituée de points de niveaux de gris différents. L'espace (2) de représentation des pixels d'une telle image n'a alors qu'une seule dimension, qui correspond à une composante chromatique grise (c'est-à-dire à des niveaux de gris). Les deux seuls vecteurs (30) de référence possibles correspondent alors à un vecteur représentant un pixel blanc et un vecteur représentant un pixel noir. Selon le niveau de gris représenté par le vecteur ajusté (20) représentatif du pixel (11), le vecteur (30) de référence le plus proche (blanc ou noir) sera choisi. L'erreur vectorielle introduite correspond à la différence entre le niveau de gris initial du pixel et le noir ou le blanc attribué. En parallèle de ce tramage par diffusion d'erreur, le niveau de gris du pixel (11), ainsi que ses coordonnées dans l'image sont utilisés dans les étapes de limitation d'encre pour décider s'il est nécessaire d'imprimer ce pixel. L'utilisation d'une seule matrice (3) de valeurs de seuils sera alors suffisante pour extraire une valeur de seuil de niveau de gris à laquelle comparer le niveau de gris d'un pixel (11), en fonction de sa position (x11, y11) dans l'image.

Dans une autre variante de réalisation plus complexe, l'image à traiter est une image en couleurs, constituée de points composés de mélanges de couleurs différentes. L'espace (2) de représentation des pixels aura alors plusieurs dimensions, dont au moins certaines correspondent à des composantes chromatiques (c'est-à-dire à des couleurs). La recherche du vecteur (30) de référence le plus proche est donc plus complexe et consiste à rechercher la combinaison de composantes chromatiques directement utilisable par le dispositif auquel la trame est destinée, la plus proche de la combinaison de composantes chromatiques représentée par le vecteur ajusté (20) représentatif du pixel (11). L'erreur vectorielle (52) introduite sera diffusée aux pixels (12) suivants et voisins dans la trame. Les étapes de limitation d'encre en parallèle de ce tramage par diffusion d'erreur seront également plus complexes car l'utilisation de plusieurs matrices (3) de valeurs de seuils sera nécessaire. On pourra utiliser par exemple une matrice (3) par composante chromatique traitée. Chaque matrice (3) de valeurs de seuils sera utilisée pour extraire une valeur de seuil de couleur à laquelle comparer la teneur d'un pixel (11) en cette couleur, c'est-à-dire les coordonnées, dans une dimension, du vecteur initial (16) représentatif d'un pixel (11), avant ajustement (19) en fonction des erreurs vectorielles (52).

Les étapes de limitation d'encre consistent en la comparaison des coordonnées du vecteur initial (16), dans chacune des dimensions de l'espace (2) de représentation, avec des valeurs de seuils permettant de décider si la composante chromatique représentée par cette dimension doit être ou non imprimée (ou affichée). En fonction de la position (x11, y11) du pixel (11) dans l'image, la valeur de seuil correspondant à cette position dans la matrice (3) correspondant à la composante chromatique concernée sera extraite (31) pour la comparaison (33). Cette comparaison (33) des coordonnées du vecteur initial (16) représentatif du pixel (11) en cours de traitement, pour chaque composante chromatique (i.e. chaque dimension de l'espace (2) de représentation), à une valeur de seuil extraite d'une matrice (3) correspondant à cette composante chromatique, aboutit à l'attribution d'une valeur (34) de décision de validation de cette composante chromatique du pixel. Cette valeur (34) de décision de validation attribuée pour chacune des dimensions de l'espace de représentation conditionnera la présence ou l'absence, dans le pixel imprimé ou affiché, de chacune des composantes chromatiques représentées par chacune des dimensions de l'espace (2). En fonction de la valeur (34) de décision de validation de chaque composante chromatique du pixel, les coordonnées du vecteur (30) de référence attribué, le plus proche du vecteur ajusté (20), seront modifiées (35) pour obtenir un vecteur (41) de référence final. Chaque vecteur représentatif d'un pixel (11) en cours de traitement sera donc remplacé par un vecteur (41) de référence final dont les coordonnées dépendent de la position (x11, y11) de ce pixel dans l'image et à la fois de sa composition chromatique et de celle des pixels voisins dans la trame.

Le cas le plus simple d'une image en niveaux de gris sera gardé pour l'explication du procédé selon l'invention. Lorsqu'un pixel (11) est traité, sa position, définie par ses coordonnées (x11, y11) dans le plan de l'image est traitée, dans le dispositif d'établissement de trame, par des moyens de calcul de signaux représentatifs des coordonnées des pixels dans l'image. Pour une image en niveaux de gris, on utilisera une matrice (3) de valeurs de seuils contenant une valeur de seuil de niveau de gris pour chacune des positions (x11, y11) possibles du pixel (11) en cours de traitement. A partir des coordonnées (x11, y11) du pixel (11) en cours de traitement, une étape d'extraction (31) de la valeur de seuil dans la matrice (3) permet de déterminer la valeur de seuil de niveau de gris correspondant à cette position dans la matrice. Une étape de réglable (32) de la valeur de seuil extraite consiste ensuite à ajouter au seuil extrait un facteur (321) de décalage réglable puis à multiplier la valeur obtenue par un facteur (322) d'échelle réglable. La valeur de seuil ainsi obtenue sera alors comparée (33) avec la valeur du signal représentatif des coordonnées du vecteur initial (16) dans cette dimension, c'est-à-dire au niveau de gris du pixel (11). En fonction de cette comparaison (33), la valeur extrême (blanc ou noir), du côté de laquelle le niveau de gris du pixel se trouve, par rapport à cette valeur de seuil résultante, est attribuée au pixel. Cette attribution d'une valeur extrême correspond à l'attribution d'une valeur (34) de décision de validation du pixel, c'est-à-dire, par exemple, de décision de l'impression ou non de ce pixel. Dans le cas d'une image en couleur, cette valeur (34) de décision de validation pour une composante chromatique correspond à la décision, par exemple, de l'impression ou non de la couleur représentée par cette composante chromatique pour ce pixel. Si toutes les valeurs de décision de validation correspondent, par exemple, à une interdiction de l'impression des composantes chromatiques qu'elles concernent, le vecteur (41) de référence final correspondra à un pixel blanc (aucune encre n'aura été imprimée). Si, au contraire, toutes les valeurs de décision de validation correspondent, par exemple, à une autorisation de l'impression des composantes chromatiques qu'elles concernent, le vecteur (41) de référence final sera identique au vecteur (30) de référence le plus proche du vecteur ajusté (20), représentatif du pixel (11) en cours de traitement après ajustement du vecteur initial (16) en fonction des erreurs vectorielles réalisées sur les pixels voisins dans la trame.

Une étape de transmission (40) des signaux représentatifs des coordonnées du vecteur (41) de référence final attribué au pixel (11), grâce à des moyens de transmission d'ordres, vers le dispositif (100) auquel la trame est destinée, permet l'impression ou l'affichage du pixel (11) traité. Lorsque les signaux représentatifs des coordonnées du vecteur (41) de référence final sont adaptés au dispositif, cette étape (40) pourra se faire directement par envoi de ces signaux vers le dispositif (100). Si le dispositif nécessite des signaux sous une forme différentes des signaux représentatifs des coordonnées du vecteur (41) de référence final, cette étape (40) pourra bien entendu être associée à une étape de conversion de ces signaux en signaux utilisables par le dispositif (100) auquel la trame est destinée.

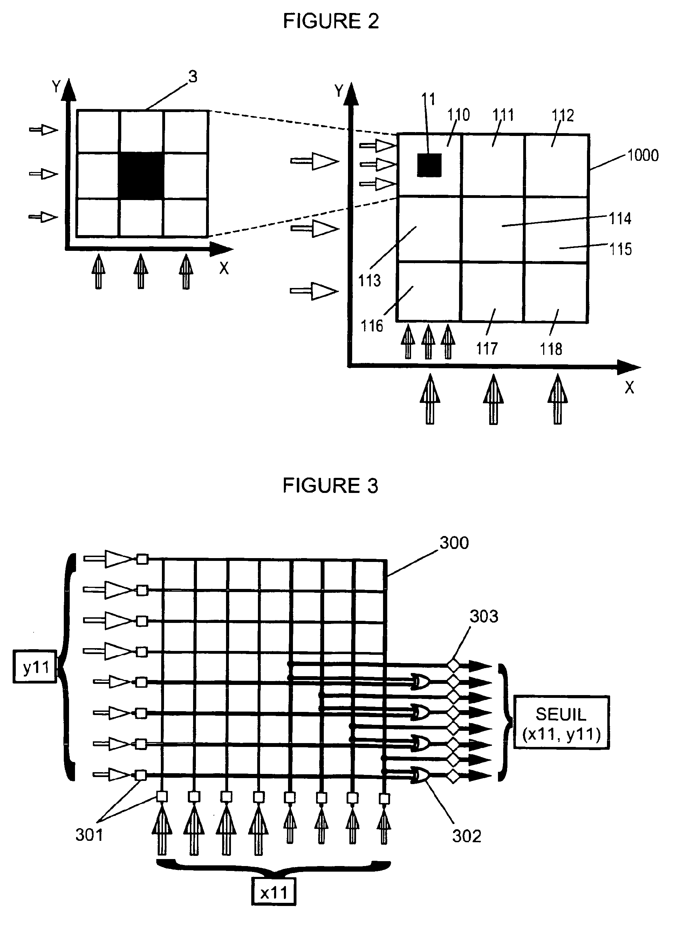

La figure 2 représente l'image (1000) à tramer et les coordonnées des pixels dans l'image, calculées grâce à des moyens de calcul de signaux représentatifs des coordonnées des pixels de la trame. Les signaux représentatifs des coordonnées des pixels dans l'image selon l'axe des abscisses (X) sont représentés par des flèches rayées sur les figures 2 et 3. Les signaux représentatifs des coordonnées des pixels dans l'image selon l'axe des ordonnées (Y) sont représentés par des flèches blanches. Parmi les n signaux représentatifs des coordonnées d'un pixel (11) dans l'image, une partie, par exemple plusieurs p bits de poids fort (représentés par les grandes flèches), représentent une région (110) de l'image (1000) dans laquelle le pixel (11) se trouve. Une autre partie des signaux représentatifs des coordonnées des pixels dans l'image, par exemple plusieurs n-p bits de poids faible (représentés par les petites flèches), représente les coordonnées précises (x11, y11) du pixel dans cette région (110) définie par plusieurs bits de poids fort. Seule cette deuxième partie des signaux (les n-p bits de poids faible représentés par les petites flèches) est utilisée dans la matrice (3) pour déterminer, à partir donc des coordonnées précises (x11, y11) du pixel, la valeur de seuil à laquelle comparer les coordonnées, dans la dimension concernée par la matrice, du vecteur initial (16) représentatif du pixel (i.e. le niveau de gris du pixel). La matrice (3) de valeurs de seuils a donc des dimensions réduites par rapport à celles de l'image (1000) complète. La répétition de l'utilisation de la matrice (3) dans des positions (110 à 118) complémentaires sur l'image (1000), définies par la première partie des signaux (les p bits de poids fort représentés par les grandes flèches), permettra de traiter toute l'image. Cette première partie des signaux représentatifs des coordonnées d'un pixel (11) dans l'image (p bits de poids fort) détermine dans quelle région (110) de l'image (1000), couverte par la matrice (3) de valeurs de seuils, se trouve le pixel (11) en cours de traitement. Les moyens de calcul des signaux représentatifs des coordonnées des pixels de la trame permettent le traitement de cette région (110) par la matrice (3), représentée par des bits de poids fort des signaux représentatifs des coordonnées du pixel (11) dans l'image (1000). Grâce à l'utilisation des bits de poids faible des signaux représentatifs des coordonnées du pixel (11) dans l'image (1000), la valeur de seuil correspondant aux coordonnées du pixel (11) dans la matrice sera extraite pour le traitement du niveau de gris du pixel (11).

Dans une variante de réalisation, la matrice (3) de valeurs de seuil est générée par un circuit (300) électronique, implémenté dans le dispositif d'établissement de trame. La figure 3 représente le circuit (300) électronique de génération de la matrice (3) de valeurs de seuils. Ce circuit comporte des entrées (301) (représentées par des carrés blancs) recevant les signaux représentatifs des coordonnées (x11, y11) du pixel (11) dans les deux dimensions de l'image (1000). Comme dans la figure 2, les signaux représentatifs des coordonnées (x11, y11) du pixel sont représentés par des flèches rayées pour ceux concernant l'axe des abscisses et des flèches blanches pour ceux concernant l'axe des ordonnées. Parmi ces signaux, seuls sont utilisés dans le circuit (300) ceux représentant les coordonnées précises du pixel, par exemple plusieurs bits de poids faible (représentés par les petites flèches), dans la région (110) définie par ceux représentant les coordonnées grossières du pixel, par exemple plusieurs bits de poids fort (représentés par les grandes flèches). Seules les entrées recevant ces signaux représentatifs des coordonnées précises sont connectées par des portes logiques (302), réalisant des opérations logiques, notamment de type « OU exclusif », par exemple. Les sorties (303) (représentées par des losanges) sont connectées à ces portes logiques (302) et véhiculent les signaux (représentés par des flèches noires) représentatifs de la valeur de seuil qui correspond aux coordonnées (x11, y11) du pixel (11) dans la région (110) de l'image (1000). Au lieu d'être stockées dans une mémoire et consultées pour chaque pixel, les différentes valeurs de seuils de la matrice sont donc générées par les portes logiques (302) du circuit (300), à partir d'une partie des signaux représentatifs des pixels en cours de traitement.

Au cours de l'établissement d'une trame (1), les coordonnées du vecteur représentatif du pixel (11) en cours de traitement, dans la dimension de l'espace (2) de représentation concernée par une matrice de valeurs de seuils, par exemple les niveaux de gris, sont comparées à la valeur de seuil générée par le circuit (300) électronique de génération de matrice de valeurs de seuils, à partir d'une partie des signaux représentatifs des coordonnées (x11, y11) du pixel (11) dans l'image, par exemple plusieurs bits de poids faible. En fonction du nombre de signaux nécessaires pour représenter les coordonnées du pixel dans l'image (i.e. en fonction de la résolution de l'image à tramer) et du nombre de signaux nécessaires pour représenter les coordonnées, dans une dimension de l'espace (2) de représentation, des vecteurs initiaux (16) représentatifs des pixels, on pourra décider du nombre d'entrées (301) du circuit (300) et du nombre de signaux représentatifs des coordonnées du pixel que l'on autorise à être traités par les portes logiques (302). Le nombre de sorties (303) du circuit (300) connectées aux portes logiques détermine le nombre de signaux représentatifs des valeurs de seuil générées par le circuit. Dans un cas extrême où ils ne seraient pas égaux, une éventuelle étape de conversion permettrait d'adapter le nombre de signaux représentatifs des valeurs de seuil au nombre de signaux représentatifs des coordonnées du vecteur représentatif du pixel en cours de traitement, pour leur comparaison. Dans l'exemple représenté sur la figure 3, la matrice générée par le circuit électronique est une matrice de Bayer établie à partir de la théorie mathématique des suites à basse discrépence, selon laquelle les valeurs de seuil S de la matrice, pour des coordonnées x et y codées chacune sur n bits peuvent être calculées comme suit :
S₂ⱼ₋₁ = xₙ₋₍ⱼ₋₁₎ OU exclusif yₙ₋₍ⱼ₋₁₎, pour 1 ≤ j ≤ n, ce qui est réalisé par des portes logiques de type OU exclusif de la figure 3 ;-,
et S₂ⱼ =xₙ₋₍ⱼ₋₁₎, pour 1 ≤ j ≤ n, ce qui est réalisé par les connexions directes des entrées selon les abscisses avec les sorties du circuit de la figure 3.
Par exemple, les coordonnées du pixel (11) sont codées sur 8 bits, dans chacune des dimensions. Seuls 4 bits de poids faible sont utilisés pour le calcul de la valeur de seuil, générée grâce à des portes logiques (dont seulement 4 sont représentées pour cet exemple) et véhiculée par 8 sorties du circuit (300) qui codent donc la valeur de seuil sur 8 bits. Un niveau de gris du pixel codé sur 8 bits pourra être directement comparé à cette valeur de seuil codée sur 8 bits pour attribuer au pixel une valeur extrême (blanc ou noir) codée sur 1 bit. On comprend que l'on a ainsi réalisé un procédé d'établissement de trame par diffusion d'erreur et limitation d'encre par matrice de valeurs de seuils.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'établissement de trame (1) de signaux représentatifs d'une image, par diffusion d'erreur, réalisant une représentation des pixels en « vecteurs » d'un espace (2) de représentation dont au moins une dimension correspond à une composante chromatique et dans lequel certains vecteurs, dits « vecteurs de référence », correspondent chacun à une composition chromatique directement imprimable ou affichable par les dispositifs auxquels la trame est destinée, **caractérisé en ce qu'**il comporte au moins une étape de limitation d'encre par utilisation d'au moins une matrice (3) de valeurs de seuils contenant des valeurs de seuils calculées à partir d'au moins une partie des signaux représentatifs des coordonnées (x11, y11) du pixel (11) dans l'image.

2. Procédé d'établissement de trame de signaux représentatifs d'une image selon la revendication 1, **caractérisé en ce qu'**il comporte les étapes suivantes pour chaque pixel de la trame :
- représentation (15) d'un pixel (11) dans ledit espace (2) sous la forme de signaux représentatifs d'un vecteur initial (16) dont les coordonnées sont ajustées (19), en fonction des erreurs vectorielles (52) mémorisées éventuellement introduites sur les pixels (10) précédents et voisins dans la trame, pour obtenir un vecteur ajusté (20), dont les coordonnées sont stockées (29) en mémoire ;
- attribution (25) aux signaux représentatifs des coordonnées du vecteur ajusté (20) des signaux représentatifs de coordonnées du vecteur (30) de référence le plus proche du vecteur ajusté (20) représentatif du pixel (11) en cours de traitement, puis calcul et mémorisation de l'erreur vectorielle (52) introduite pour ce pixel, par comparaison des nouvelles coordonnées (30) attribuées au vecteur avec ses coordonnées ajustées (20) préalablement stockées (29) en mémoire, puis diffusion (60) de cette erreur vectorielle (52) mémorisée aux pixels (12) suivants et voisins dans la trame ;
- extraction (31), à partir d'au moins une matrice (3) de valeurs de seuils, les seuils étant relatifs à une composante chromatique correspondant à une dimension de l'espace (2) de représentation des vecteurs, d'une valeur de seuil dite extraite, calculée à partir d'au moins une partie des signaux représentatifs des coordonnées (x11, y11) du pixel (11) dans l'image;
- réglage (32) de la valeur de seuil extraite pour obtenir une valeur de seuil résultante, puis comparaison (33) de la valeur de seuil résultante avec la valeur du signal représentatif des coordonnées du vecteur initial (16) dans cette dimension et attribution au pixel d'une valeur (34) de décision de validation de la composante chromatique concernée par cette dimension de l'espace (2) de représentation, correspondant à l'autorisation ou l'interdiction de l'attribution au pixel de cette composante chromatique ;
- intégration (35) de la valeur (34) de décision de validation attribuée pour chacune des composantes chromatiques dans les coordonnées du vecteur (30) de référence le plus proche attribué au pixel (11), pour la décision finale des coordonnées du vecteur à attribuer au pixel en cours de traitement, dit vecteur (41) de référence final.

3. Procédé d'établissement de trame de signaux représentatifs d'une image selon une des revendications 1 et 2, **caractérisé en ce que** l'étape d'attribution (25) aux signaux représentatifs des coordonnées du vecteur ajusté (20) des signaux représentatifs de coordonnées du vecteur (30) de référence le plus proche du vecteur ajusté (20) représentatif du pixel (11) en cours de traitement est réalisée par un algorithme de calcul du vecteur (30) de référence le plus proche du vecteur ajusté (20) représentatif du pixel (11) en cours de traitement.

4. Procédé d'établissement de trame de signaux représentatifs d'une image selon une des revendications 1 et 2, **caractérisé en ce que** l'étape d'attribution (25) aux signaux représentatifs des coordonnées du vecteur ajusté (20) des signaux représentatifs de coordonnées du vecteur (30) de référence le plus proche du vecteur ajusté (20) représentatif du pixel (11) en cours de traitement est réalisée par comparaison des valeurs des signaux représentatifs des coordonnées du vecteur ajusté (20) avec des valeurs de seuils réglables pour chacune des dimensions de l'espace (2) de représentation.

5. Procédé d'établissement de trame de signaux représentatifs d'une image selon une des revendications 1 et 2, **caractérisé en ce que** l'étape d'attribution (25) aux signaux représentatifs des coordonnées du vecteur ajusté (20) des signaux représentatifs de coordonnées du vecteur (30) de référence le plus proche du vecteur ajusté (20) représentatif du pixel (11) en cours de traitement est réalisée par consultation d'une mémoire contenant une table de correspondance entre une pluralité de vecteurs ajustés (20) représentatifs de compositions chromatiques et une pluralité de vecteurs (30) de référence représentatifs de compositions chromatiques directement imprimable ou affichable par les dispositifs (100) auxquels la trame est destinée.

6. Procédé d'établissement de trame de signaux représentatifs d'une image selon une des revendications 1 à 5, **caractérisé en ce que** le calcul de l'erreur vectorielle (52) est indépendant du vecteur (41) de référence final attribué au pixel mais dépend du vecteur (30) de référence le plus proche du vecteur ajusté (20) représentatif du pixel (11) en cours de traitement avant l'étape d'intégration (35) de la valeur (34) de décision de validation des composantes chromatiques du pixel et comporte une étape de calcul d'un vecteur d'erreur (521) dont les coordonnées, dans ledit espace (2), sont égales à la différence entre les coordonnées du vecteur (30) de référence le plus proche attribuées au vecteur ajusté (20) représentatif du pixel (11) en cours de traitement et ses coordonnées ajustées (20) préalablement stockées (29) en mémoire.

7. Procédé d'établissement de trame de signaux représentatifs d'une image selon une des revendications 1 à 6, **caractérisé en ce que** la diffusion (60) de l'erreur vectorielle (52) mémorisée consiste en l'ajustement des vecteurs initiaux (16) par ajout, dans ledit espace (2), des signaux représentatifs des coordonnées d'un vecteur d'erreur (521) calculé et mémorisé pour un pixel (11), aux signaux représentatifs des coordonnées des vecteurs initiaux (16) représentatifs des pixels (12) suivants et voisins dans la trame, pour obtenir des vecteurs ajustés (20).

8. Procédé d'établissement de trame de signaux représentatifs d'une image selon une des revendications 1 à 7, **caractérisé en ce qu'**il comporte également une étape de transmission (40) des signaux représentatifs des coordonnées du vecteur (41) de référence final représentatif du pixel (11) en cours de traitement vers le dispositif (100) auquel la trame est destinée, qui peut se faire directement ou après conversion des signaux représentatifs des vecteurs en valeurs utilisables par les dispositifs (100) auxquels la trame est destinée, pour déterminer les caractéristiques chromatiques et/ou de luminance d'un point de l'image.

9. Procédé d'établissement de trame de signaux représentatifs d'une image selon une des revendications 1 à 8, **caractérisé en ce que** l'étape de réglage (32) de la valeur de seuil extraite consiste en l'ajout d'un facteur (321) de décalage réglable puis la multiplication par un facteur (322) d'échelle réglable.

10. Procédé d'établissement de trame de signaux représentatifs d'une image selon une des revendications 1 à 9, **caractérisé en ce que** ladite matrice (3) de valeurs de seuils est une matrice de Bayer construite à partir des signaux représentatifs des coordonnées (x11, y11) des pixels dans l'image, représentées sur n bits, parmi lesquels plusieurs m bits de poids faibles sont utilisés pour calculer les valeurs de seuils de compositions chromatiques contenues dans la matrice, le nombre m de bits de poids faibles utilisés définissant les dimensions réduites de la matrice (3) par rapport à l'image (1000) complète et les n-m bits restant définissant les différentes positions (110 à 118) complémentaires dans lesquelles l'utilisation de la matrice (3) doit être répétée pour le traitement de l'image (1000) dans son intégralité.

11. Procédé d'établissement de trame de signaux représentatifs d'une image selon une des revendications 1 à 10, **caractérisé en ce que** les valeurs de seuils contenues dans la matrice (3) sont calculées par un algorithme mettant en oeuvre la théorie mathématique des suites à basse discrépence.

12. Procédé d'établissement de trame de signaux représentatifs d'une image selon une des revendications 1 à 11, **caractérisé en ce que** l'algorithme de calcul des valeurs de seuils contenues dans la matrice (3) met en oeuvre les suites de Van Der Corput.

13. Procédé d'établissement de trame de signaux représentatifs d'une image selon une des revendications 1 à 12, **caractérisé en ce que** ladite matrice (3) de valeurs de seuils est générée par un circuit (300) électronique implémenté dans le dispositif d'établissement de trames de signaux, au lieu d'être stockée dans une mémoire et consultée pour chaque pixel.

14. Dispositif d'établissement de trame, pour la mise en oeuvre du procédé selon une des revendications 1 à 13, comprenant des moyens de traitement de l'image à tramer en lignes successives composées de pixels successifs, des moyens de mémorisation des pixels successifs d'au moins une ligne de la trame, des moyens de calcul de signaux représentatifs des coordonnées des pixels dans l'image, des moyens de conversion de chaque pixel de l'image sous forme d'un vecteur d'un espace dont au moins une dimension correspond à une composante chromatique et/ou de luminance, des moyens d'attribution de coordonnées de vecteurs de référence aux coordonnées des vecteurs représentatifs des pixels en cours de traitement, des moyens de calcul et de mémorisation d'erreurs introduites par le traitement des pixels, des moyens de diffusion d'erreur sur des pixels adjacents de la trame et des moyens de transmission de signaux de commandes élaborés en fonction de la trame vers les dispositifs auxquels la trame est destinée, **caractérisé en ce qu'**il comporte au moins une matrice (3) concernant une composante chromatique et contenant des valeurs de seuils générées à partir d'au moins une partie des signaux représentatifs des coordonnées des pixels dans l'image.

15. Dispositif d'établissement de trame selon la revendication 14, **caractérisé en ce que** les moyens de calcul des signaux représentatifs des coordonnées des pixels dans l'image permettent la discrimination, parmi les n signaux représentatifs des coordonnées des pixels dans l'image, de plusieurs m bits de poids faibles pour la génération des valeurs de seuils de la matrice (3) et des n-m bits restant pour la définition de la région (110) de l'image (1000) dans laquelle les signaux représentatifs des coordonnées des vecteurs initiaux (16) représentatifs des pixels, dans la dimension de l'espace (2) correspondant à la composante chromatique concernée par la matrice, doivent être comparés (33) à ces valeurs de seuils de la matrice (3).

16. Dispositif d'établissement de trame selon une des revendications 14 et 15, **caractérisé en ce que** la matrice (3) de valeurs de seuils est générée par un circuit (300) électronique implémenté dans le dispositif d'établissement de trame et comportant, dans deux dimensions, des entrées (301) au moins en nombre correspondant au nombre m de bits de poids faible pour recevoir, parmi les signaux représentatifs des coordonnées des pixels dans l'image, ces m bits de poids faibles, utilisés pour la génération des valeurs de seuils, grâce à des portes logiques (302) connectées à certaines desdites entrées (301) du circuit et constituant les sorties (303) du circuit, véhiculant les signaux représentatifs des valeurs de seuils de la matrice (3).

## Claims

1. Method of establishing a half-tone of (1) signals representing an image by error diffusion, producing a representation of the pixels in "vectors" in a representation space (2) of which at least one dimension corresponds to a chromatic component and in which certain vectors, known as "reference vectors", each correspond to a chromatic composition which can be directly printed or displayed by the devices for which the half-tone is intended, **characterised in that** it comprises at least one step of ink limiting by use of at least one threshold value matrix (3) containing threshold values calculated from at least a part of the signals representing the co-ordinates (x11, y11) of the pixel (11) in the image.

2. Method of establishing a half-tone of signals representing an image as claimed in Claim 1, **characterised in that** it comprises the following steps for each pixel of the half-tone:
- representation (15) of a pixel (11) in the said space (2) in the form of signals representing an initial vector (16) of which the co-ordinates are adjusted (19) as a function of the memorised vector errors (52) which may be introduced at the: preceding and neighbouring pixels (10) in the half-tone in order to obtain an adjusted vector (20) of which the co-ordinates are stored (29) in a memory;
- attribution (25) to the signals representing the co-ordinates of the adjusted vector (20) of the signals representing co-ordinates of the reference vector (30) closest to the adjusted vector (20) representing the pixel (11) in the course of processing, then calculation and memorisation of the vector error (52) introduced for this pixel by comparison of the new co-ordinates (30) attributed to the vector with its adjusted coordinates (20) previously stored (29) in a memory, then diffusion (60) of this memorised vector error (52) to the following and neighbouring pixels (12) in the half-tone;
- extraction (31) from at least one matrix (3) of threshold values, the thresholds relating to a chromatic component corresponding to a dimension of the space (2) for representation of the vectors, a so-called extracted threshold value, calculated from at least a part of the signals representing the co-ordinates (x11, y11) of the pixel (11) in the image;
- adjustment (32) of the extracted threshold value in order to obtain a resulting threshold value, then comparison (33) of the resulting threshold value with the value of the signal representing the co-ordinates of the initial vector (16) in this dimension and attribution to the pixel of a validation decision value (34) of the chromatic component concerned by this dimension of the representation space (2) corresponding to the authorisation or the inhibition of the attribution to the pixel of this chromatic component;
- integration (35) of the attributed validation decision value (34) for each of the chromatic components in the co-ordinates of the closest reference vector (30) attributed to the pixel (11) for the final decision of the co-ordinates of the vector to be attributed to the pixel in the course of processing, the so-called final reference vector (41).

3. Method of establishing a half-tone of signals representing an image as claimed in any one of Claims 1 and 2, **characterised in that** the step of attribution (25) to the signals representing the co-ordinates of the adjusted vector (20) of the signals representing co-ordinates of the reference vector (30) closest to the adjusted vector (20) representing the pixel (11) in the course of processing is achieved by an algorithm for calculation of the reference vector (30) closest to the adjusted vector (20) representing the pixel (11) in the course of processing.

4. Method of establishing a half-tone of signals representing an image as claimed in any one of Claims 1 and 2, **characterised in that** the step of attribution (25) to the signals representing the co-ordinates of the adjusted vector (20) of the signals representing co-ordinates of the reference vector (30) closest to the adjusted vector (20) representing the pixel (11) in the course of processing is achieved by comparison of the values of the signals representing the co-ordinates of the adjusted vector (20) with adjustable threshold values for each of the dimensions of the representation space (2).

5. Method of establishing a half-tone of signals representing an image as claimed in any one of Claims 1 and 2, **characterised in that** the step of attribution (25) to the signals representing the co-ordinates of the adjusted vector (20) of the signals representing co-ordinates of the reference vector (30) closest to the adjusted vector (20) representing the pixel (11) in the course of processing is achieved by consultation of a memory containing a correspondence table between a plurality of adjusted vectors (20) representing chromatic compositions and a plurality of reference vectors (30) representing chromatic compositions which can be directly printed or displayed by the devices (100) for which the half-tone is intended.

6. Method of establishing a half-tone of signals representing an image as claimed in any one of Claims 1 to 5, **characterised in that** the calculation of the vector error (52) is independent of the final reference vector (41) attributed to the pixel but depends upon the reference vector (30) closest to the adjusted vector (20) representing the pixel (11) in the course of processing before the step of integration (35) of the validation decision value (34) of the chromatic components of the pixel and comprises a step of calculation of an error vector (521) of which the co-ordinates in the said space (2) are equal to the difference between the co-ordinates of the closest reference vector (30) attributed to the adjusted vector (20) representing the pixel (11) in the course of processing and its adjusted co-ordinates (20) previously stored (29) in a memory.

7. Method of establishing a half-tone of signals representing an image as claimed in any one of Claims 1 to 6, **characterised in that** the diffusion (60) of the memorised vector error (52) consists of adjusting the initial vectors (16) by addition in the said space (2) of the signals representing the co-ordinates of an error vector (521) calculated and memorised for a pixel (11) to the signals representing the co-ordinates of the initial vectors (16) representing the following and neighbouring pixels (12) in the half-tone in order to obtain adjusted vectors (20).

8. Method of establishing a half-tone of signals representing an image as claimed in any one of Claims 1 to 7, **characterised in that** it also comprises a step of transmission (40) of the signals representing the co-ordinates of the final reference vector (41) representing the pixel (11) in the course of processing to the device (100) for which the half-tone is intended, which may take place directly or after conversion of the signals representing the vectors in values which can be used by the devices (100) for which the half-tone is intended in order to determine the chromatic and/or brightness characteristics of a point of the image.

9. Method of establishing a hal'f-tone of signals representing an image as claimed in any one of Claims 1 to 8, **characterised in that** the step of adjustment (32) of the extracted threshold value consists of the addition of an adjustable offset factor (321) then the multiplication by an adjustable scale factor (322).

10. Method of establishing a half-tone of signals representing an image as claimed in any one of Claims I to 9, **characterised in that** the said matrix (3) of threshold values is a Bayer matrix formed from signals representing the co-ordinates (x11, y11) of the pixels in the image, represented on n bits, amongst which several least significant m bits are used in order to calculate the threshold values of chromatic compositions contained in the matrix, the number m of least significant bits used defining the reduced dimensions of the matrix (3) with respect to the complete image (1000) and the remaining n-m bits defining the different complementary positions (110 to 118) in which the use of the matrix (3) must be repeated for the processing of the image (1000) in its entirety.

11. Method of establishing a half-tone of signals representing an image as claimed in any one of Claims 1 to 10, **characterised in that** the threshold values contained in the matrix (3) are calculated by an algorithm which implements the mathematical theory of the low discrepancy sequences.

12. Method of establishing a half-tone of signals representing an image as claimed in any one of Claims 1 to 11, **characterised in that** the algorithm for calculation of the threshold values contained in the matrix (3) implements the Van Der Corput sequences.

13. Method of establishing a half-tone of signals representing an image as claimed in any one of Claims 1 to 12, **characterised in that** the said matrix (3) of threshold values is generated by an electronic circuit (300) implemented in the device for establishing half-tones of signals instead of being stored in a memory and consulted for each pixel.

14. Device for establishing a half-tone, for implementing the method as claimed in any one of Claims 1 to 13, comprising means for processing the image to be half-toned in successive lines composed of successive pixels, means for memorisation of the successive pixels of at least one line of the half-tone, means for calculation of signals representing the coordinates of the pixels in the image, means for conversion of each pixel of the image in the form of a vector of a space of which at least one dimension corresponds to a chromatic and/or brightness component, means for attribution of co-ordinates of reference vectors to the co-ordinates of the vectors representing the pixels in the course of processing, means for calculation and memorisation of errors introduced by the processing of the pixels, means for error diffusion on adjacent pixels of the half-tone and means for transmission of control signals produced as a function of the half-tone to the devices for which the half-tone is intended, **characterised in that** it comprises at least one matrix (3) concerning a chromatic component and containing threshold values generated from at least a part of the signals representing the co-ordinates of the pixels in the image.

15. Device for establishing a half-tone as claimed in Claim 14, **characterised in that** the means for calculation of the signals representing the co-ordinates of the pixels in the image allow the discrimination, amongst the n signals representing the co-ordinates of the pixels in the image, of several m least significant bits for the generation of the threshold values of the matrix (3) and of the n-m bits remaining for the definition of the region (110) of the image (1000) in which the signals representing the co-ordinates of the initial vectors (16) representing the pixels in the dimension of the space (2) corresponding to the chromatic component concerned by the matrix, must be compared (33) to these threshold values of the matrix (3).

16. Device for establishing a half-tone as claimed in any one of Claims 14 and 15, **characterised in that** the matrix (3) of threshold values is generated by an electronic circuit (300) implemented in the device for establishing a half-tone and comprising in two dimensions a number of inputs (301) corresponding to the number m of least significant bits in order to receive, amongst the signals representing the co-ordinates of the pixels in the image, these m least significant bits, used for the generation of the threshold values by virtue of logic gates (302) connected to certain of the said inputs (301) of the circuit and forming the outputs (303) of the circuit, carrying the signals representing threshold values of the matrix (3).

## Patentansprüche

1. Verfahren zur Erstellung eines Rasters (1) ein Bild darstellender Signale durch Fehlerverteilung, das eine Darstellung der Pixel als, "Vektoren" eines Darstellungsraumes (2) ausführt, wobei mindestens eine Dimension von diesem einer Farbkomponente entspricht und in dem bestimmte Vektoren, sogenannte "Bezugsvektoren", jeweils einer direkt durch die Vorrichtungen, für die das Raster bestimmt ist, anzeigbaren oder ausdruckbaren Farbkombination entsprechen, **dadurch gekennzeichnet, dass** es mindestens einen Schritt zur Tintenbegrenzung durch Verwendung mindestens einer Schwellenwert-Matrix (3) umfasst, die aus mindestens einem Teil der Signale berechnet wurden, die die Koordinaten (x11, y11) des Pixels (11) des Bildes darstellen.

2. Verfahren zur Erstellung eines Rasters ein Bild darstellender Signale nach Patentanspruch 1, **dadurch gekennzeichnet, dass** es für jedes Pixel des Rasters die folgenden Schritte umfasst:
- Darstellung (15) eines Pixels (11) im genannten Raum (2) in Form von einem Ausgangsvektor (16) entsprechenden Signalen, dessen Koordinaten in Abhängigkeit von den gespeicherten Fehlervektoren (52), die gegebenenfalls in die vorangehenden und benachbarten Pixel Im Raster eingeführt wurden, angepasst (19) werden, um einen angepassten Vektor (20) zu erhalten, dessen Koordinaten gespeichert (29) werden,
- Zuweisung (25) zu den Signalen, die Koordinaten des angepassten Vektors (20)) entsprechen, von Signalen, die Koordinaten des Bezugsvektors (30) entsprechen, der dem das gerade bearbeitete Pixel (11) darstellenden angepassten Vektor (20) am nächsten liegt, und dann Berechnung und Speicherung des bei diesem Pixel eingeführten Fehlervektors (82) durch Vergleich der neuen Koordinaten (30), die dem Vektor zugeordnet wurden, mit seinen vorher gespeicherten (29) angepassten Koordinaten (20), danach Verteilung (60) dieses gespeicherten Fehlervektors (52) auf die folgenden und benachbarten Pixel (12) im Raster;
- Entnahme (31) aus mindestens einer Schwellenwert-Matrix (3), wobei sich die Schwellenwerte auf eine Farbkomponente beziehen, die einer Dimension des Darstellungsraumes (2) der Vektoren entspricht, eines sogenannten entnommenen Schwellenwertes, der aus mindestens einem Teil der Signale berechnet wird, die die Koordinaten (x11, y11) des Pixels (11) des Bildes darstellen;
- Regelung (32) des entnommenen Schwellenwertes, um einen resultierenden Schwellenwert zu erhalten, dann Vergleich (33) des resultierenden Schwellenwertes mit dem Wert des Signals, das den Koordinaten des Ausgangsvektors (16) entspricht, in dieser Dimension und Zuweisung eines Wertes (34) der Bestätigungsentscheidung der von dieser Dimension des Darstellungsraumes (2) betroffenen Farbkomponente zum Pixel, der der Genehmigung oder dem Verbot der Zuordnung dieser Farbkomponente zum Pixel entspricht;
- Einarbeiten (35) des Wertes (34) der Bestätigungsentscheidung, der jeder der Farbkomponenten zugeordnet ist, in die Koordinaten des dem Pixel (11) zugeordneten nächstliegenden Bezugsvektors (30) für die endgültige Bestimmung der Koordinaten des dem gerade bearbeiteten Pixel zuzuordnenden Vektors, endgültiger Bezugsvektor (41) genannt.

3. Verfahren zur Erstellung eines Rasters ein Bild darstellender Signale nach einem der Patentansprüche 1 und 2, **dadurch gekennzeichnet, dass** der Schritt der Zuweisung (25) zu den Signalen, die Koordinaten des angepassten Vektors (20) entsprechen, von Signalen, die Koordinaten des Bezugsvektors (30) entsprechen, der dem dem gerade bearbeiteten Pixel (11) entsprechenden angepassten Vektor (20) am nächsten liegt, durch einen Algorithmus zur Berechnung des Bezugsvektors (30) erfolgt, der dem dem gerade bearbeiteten Pixel (11) entsprechenden angepassten Vektor (20) am nächsten liegt.

4. Verfahren zur Erstellung eines Rasters ein Bild darstellender Signale nach einem der Patentansprüche 1 und 2, **dadurch gekennzeichnet, dass** der Schritt der Zuweisung (25) zu den Signalen, die Koordinaten des Bezugsvektors (30) entsprechen, der dem das gerade bearbeitete Pixel (11) entsprechenden angepassten Vektor (20) am nächsten liegt, durch Vergleich der Werte der Signale, die Koordinaten des angepassten Vektors (20) entsprechen, mit Schwellenwerten erfolgt, die für jede der Dimensionen des Darstellungsraumes (2) einstellbar sind.

5. Verfahren zur Erstellung eines Rasters ein Bild darstellender Signale nach einem der Patentansprüche 1 und 2, **dadurch gekennzeichnet, dass** der Schritt der Zuweisung (25) zu den Signalen, die Koordinaten des Bezugsvektors (30) entsprechen, der dem dem gerade bearbeiteten Pixel (11) entsprechenden angepassten Vektor (20) am nächsten liegt, durch Lesen eines Speichers erfolgt, der eine Tabelle von Korrespondenzen zwischen einer Vielzahl angepasster Vektoren (20), die Farbkombinationen entsprechen, und einer Vielzahl von Bezugsvektoren (30) enthält, die Farbkombinationen entsprechen, die direkt durch die Vorrichtungen (100) ausdruckbar oder anzeigbar sind, für die das Raster bestimmt ist.

6. Verfahren zur Erstellung eines Rasters ein Bild darstellender Signale nach einem der Patentansprüche 1 bis 5, **dadurch gekennzeichnet, dass** die Berechnung des Fehlervektors (52) vom endgültigen, dem Pixel zugeordneten Bezugsvektor (41) unabhängig ist, aber vom Bezugsvektor (30), der dem das gerade bearbeitete Pixel (11) entsprechenden angepassten Vektor (20) am nächsten liegt, vor dem Schritt des Einarbeitens (35) des Wertes (34) der Bestätigungsentscheidurig der Farbkomponenten des Pixels abhängt und einen Schritt der Berechnung eines Fehlervektors (521), dessen Koordinaten im genannten Raum (2) der Differenz zwischen den Koordinaten des dem dem gerade bearbeiteten Pixel (11) entsprechenden angepassten Vektor (20) am nächsten liegenden Bezugsvektors (30), und seinen vorher gespeicherten (29) angepassten Koordinaten (20) gleich sind.

7. Verfahren zur Erstellung eines Rasters ein Bild darstellender Signale nach einem der Patentansprüche 1 bis 6, **dadurch gekennzeichnet, dass** die Verteilung (60) des gespeicherten Fehlervektors (52) in der Anpassung der Ausgangsvektoren (16) durch Hinzufügen im genannten Raum (2) der den Koordinaten eines für ein Pixel (11) berechneten und gespeicherten Fehlervektors (521) entsprechenden Signale zu den Signalen besteht, die den Koordinaten der Ausgangsvektoren (16) entsprechen, die den folgenden und benachbarten Pixeln (12) im Raster entsprechen, um angepasste Vektoren (20) zu erhalten.

8. Verfahren zur Erstellung eines Rasters ein Bild darstellender Signale nach einem der Patentansprüche 1 bis 7, **dadurch gekennzeichnet, dass** es auch einen Schritt der Übermittlung (40) der Signale, die den Koordinaten des endgültigen Bezugsvektors (41) entsprechen, der dem gerade bearbeiteten Pixel (11) entspricht, an die Vorrichtung (100) enthält, für die das Raster bestimmt ist, die direkt erfolgen kann oder nach Konvertierung der die Vektoren darstellenden Signale in von den Vorrichtungen (100), für die das Raster bestimmt ist, verwendbare Werte, um die Farb- und/oder Helligkeitswerte eines Punktes des Bildes festzulegen.

9. Verfahren zur Erstellung eines Rasters ein Bild darstellender Signale nach einem der Patentansprüche 1 bis 8, **dadurch gekennzeichnet, dass** der Schritt der Regelung (32) des entnommenen Schwellenwertes im Hinzufügen eines regelbaren Verschlebungsfaktors (321) und dann der Multiplikation mit einem regelbaren Skalenfaktor (322) besteht.

10. Verfahren zur Erstellung eines Rasters ein Bild darstellender Signale nach einem der Patentansprüche 1 bis 9, **dadurch gekennzeichnet, dass** die genannte Schwellenwert-Matrix (3) eine Bayer-Matrix ist, die aus den Signalen gebildet wird, die den Koordinaten (x11, y11) der Pixel des Bildes entsprechen, dargestellt durch n Bits, von denen mehrere m niederwertige Bits verwendet werden, um die Schwellenwerte von Farbkombinationen zu berechnen, die in der Matrix enthalten sind, wobei die verwendete Anzahl m an niederwertigen Bits die im Vergelich zum vollständigen Bild (1000) verringerten Abmessungen der Matrix (3) definieren und die n - m verbleibenden Bits die verschiedenen ergänzenden Positionen (110 bis 118), in denen die Verwendung der Matrix (3) zur Verarbeitung des gesamten Bildes (1000) wiederholt werden muss.

11. Verfahren zur Erstellung eines Rasters ein Bild darstellender Signale nach einem der Patentansprüche 1 bis 10, **dadurch gekennzeichnet, dass** die in der Matrix (3) enthaltenen Schwellenwerte durch einen Algorithmus berechnet werden, der die mathematische Theorie der Folgen geringer Diskrepanz anwendet.

12. Verfahren zur Erstellung eines Rasters ein Bild darstellender Signale nach einem der Patentansprüche 1 bis 11, **dadurch gekennzeichnet, dass** der Algorithmus zur Berechnung der Schwellenwerte, die in der Matrix (3) enthalten sind, die Folgen von Van der Corput anwendet.

13. Verfahren zur Erstellung eines Rasters ein Bild darstellender Signale nach einem der Patentansprüche 1 bis 12, **dadurch gekennzeichnet, dass** die genannte Schwellenwert-Matrix (3) durch eine elektronische Schaltung (300) erzeugt wird, die in der Vorrichtung zur Erstellung von Signalrastern implementiert ist, statt in einem Speicher gespeichert zu sein und für jedes Pixel gelegen zu werden.

14. Vorrichtung zur Erstellung eines Rasters zur Ausführung des Verfahrens nach einem der Patentansprüche 1 bis 13, Mittel zur Verarbeitung des in Raster aus aufeinanderfolgenden Zeilen, die aus aufeinanderfolgenden Pixeln bestehen, zu verarbeitenden Bildes umfassend, Mittel zur Speicherung der aufeinanderfolgenden Pixel mindestens einer Zelle des Rasters, Mittel zur Berechnung von Signalen, die den Koordinaten der Pixel des Bildes entsprechen, Mittel zur Konvertierung Jedes Pixels des Bildes in Form eines Vektors eines Raumes, wobei mindestens eine seiner Dimensionen einer Farb- und/oder Luminanzkomponente entspricht, Mittel zur Zuweisung von Bezugsvektorkoordinaten zu den Koordinaten der Vektoren, die den gerade bearbeiteten Pixeln entsprechen, Mittel zur Berechnung und Speicherung von Fehlern, die durch die Verarbeitung der Pixel eingeführt werden, Mittel zur Fehlerverteilung auf benachbarte Pixel des Rasters und Mittel zur Übermittlung von Befehissignalen, die in Abhängigkeit vom Raster erstellt werden, an die Vorrichtungen, für die das Raster bestimmt ist, **dadurch gekennzeichnet, dass** sie mindestens eine Matrix (3) aufweist, die eine Farbkomponente betrifft und Schwellenwerte enthält, die aufgrund mindestens eines Teils der Signale erzeugt werden, die die Koordinaten der Pixel des Bildes darstellen.

15. Vorrichtung zur Erstellung eines Rasters nach Patentanspruch 14, **dadurch gekennzeichnet, dass** die Mittel zur Berechnung der Signale, die den Koordinaten der Pixel des Bildes entsprechen, die Unterscheidung mehrerer m niederwertiger Bits unter den n Signalen, die den Koordinaten der Pixel des Bildes entsprechen, zur Erzeugung der Schwellenwerte der Matrix (3) und der übrigen n - m Bits zur Definition des Bereiches (110) des Bildes (1000) erlauben, in dem die Signale, die den Koordinaten der die Pixel darstellenden Ausgangsvektoren (16) in der Dimension des Raumes (2), die der die Matrix betreffenden Farbkomponente entspricht, zugehören, mit diesen Schwellenwerten der Matrix (3) verglichen (33) werden müssen.

16. Vorrichtung zur Erstellung eines Rasters nach irgendeinem der Patentansprüche 14 und 15, **dadurch gekennzeichnet, dass** die Schwellenwert-Matrix (3) durch eine elektronische Schaltung (300) erzeugt wird, die in der Vorrichtung zur Erstellung von Signalrastern implementiert ist und in zwei Dimensionen Eingänge (301) aufweist, deren Anzahl mindestens der Zahl m niederwertiger Bits entspricht, um unter den Signalen, die den Koordinaten der Pixel des Bildes entsprechen, diese m niederwertigen Bits zu empfangen, die zur Erzeugung der Schwellenwerte verwendet werden, wobei dies durch logische Gatter (302) erfolgt, die mit bestimmten der genannten Eingänge (301) der Schaltung verbunden sind und die Ausgänge (303) der Schaltung bilden, die die Signale ausgeben, die den Schwellenwerten der Matrix (3) entsprechen.
